# EUROPÄISCHE PATENTANMELDUNG

(11) **EP 4 361 190 A1**
(43) Veröffentlichungstag der Anmeldung: **01.05.2024**
(21) Anmeldenummer: 22203934.9
(22) Anmeldetag: 26.10.2022
(51) Int. Cl.: C08G 18/10, C08G 18/48, C08G 18/75, C08G 59/40, C09J 163/00, C09J 175/00

(54) **HITZEHÄRTBARE POLYURETHAN-ZUSAMMENSETZUNGEN MIT BREITEM TEMPERATURFENSTER**

(71) Anmelder: Sika Technology AG, 6340 Baar (CH)
(72) Erfinder: SCHLUMPF, Michael, 8143 Stallikon (CH); JENNI, Melanie, 5722 Gränichen (CH)
(74) Vertreter: Sika Patent Attorneys

(57) **Zusammenfassung**

Ein Hydrazid mit einem Schmelzpunkt von mindestens 65°C wird als Härter für die Hitzehärtung in einer hitzehärtbaren Polyurethan-Zusammensetzung, die ein Prepolymer mit Isocyanat-Endgruppen, erhalten aus aus mindestens einem Polyisocyanat und mindestens einem Polyol, sowie mindestens ein Epoxidharz umfasst, verwendet.

Durch diese Kombination werden hitzehärtende Polyurethanzusammensetzungen erhalten, welche eine bessere Lagerstabilität aufweisen und über einen breiten Temperaturbereich mit konstanten mechanischen Eigenschaften aushärtbar sind.

## Beschreibung

### Technisches Gebiet

Die Erfindung betrifft die Verwendung eines Härters für die Hitzehärtung in einer hitzehärtbaren Polyurethan-Zusammensetzung. Des Weiteren betrifft die Erfindung eine hitzehärtbare Polyurethan-Zusammensetzung sowie ein Verfahren zur Härtung einer solchen Zusammensetzung.

### Stand der Technik

Polyurethan-Zusammensetzungen sind seit langem bekannt und werden in vielen Bereichen eingesetzt, z.B. als Klebstoffe, Dichtstoffe oder Beschichtungen in der Bau- und Fertigungsindustrie. Es wird zwischen einkomponentigen (1K) und zweikomponentigen (2K) Polyurethan (PUR)-Zusammensetzungen unterschieden. Bei den 1K Polyurethan-Zusammensetzungen, bei denen alle Bestandteile in einer Komponente enthalten sind, kann man ferner unterscheiden zwischen feuchtigkeitshärtenden Zusammensetzungen, die unter Einfluss von Luftfeuchtigkeit aushärten, und hitzehärtenden Zusammensetzungen, bei denen die Aushärtung durch Erwärmung induziert wird.

Die WO 2009/080738 A1 (Sika Technology AG) beschriebt z.B. eine feuchtigkeitshärtende Polyurethanzusammensetzungen, welche ein Polyisocyanat und ein mittels Aldehyd oder Keton blockiertes Amin als durch Feuchtigkeit aktivierbaren Vernetzer aufweist. Diese Zusammensetzungen härten mit Feuchtigkeit bei Raumtemperatur oder leicht erhöhter Temperatur, insbesondere unterhalb von 40 °C aus, wobei Aldehyde und/oder Ketone entstehen. Um ein unerwünschtes Ausgasen der Aldehyde und Ketone im ausgehärteten Zustand eine deutlich zu reduzieren, enthält die Zusammensetzung Hydrazide, welche mit den Aldehyden und/oder Ketonen bei Temperaturen über 80° zu schwerflüchtigen Komponenten reagieren.

Hitzehärtende Polyurethan-Zusammensetzungen werden vornehmlich als Kleb- und Dichtstoffe in der industriellen Fertigung eingesetzt. Dies im Besonderen als Dichtstoffe im Fahrzeugbau, wobei die hitzehärtenden Polyurethan-Zusammensetzungen beispielsweise nach der Lackierung der Bauteile zusammen mit der Lackhärtung in entsprechenden Aushärtungsöfen, typischerweise bei Temperaturen von > 110°C, erfolgt.

Bei hitzehärtenden Polyurethan-Zusammensetzungen werden thermolabile Härter bzw. durch Wärme aktivierbare Härter eingesetzt, welche bei einer definierten Temperatur den Härtungsvorgang der Zusammensetzung starten.

Die EP 0 255 572 A1 (Sika AG) beschreibt z.B. eine Einkomponenten-Klebstoff- und/oder Dichtstoffmasse, die ein Prepolymer auf Basis von Polyurethan und einen mit Wärme aktivierbaren Härter enthält, wobei das stöchiometrische Verhältnis zwischen Prepolymer und Härter so gewählt wird, so dass bei Erwärmung auf Temperaturen von 60 bis 180°C nur eine Teilvernetzung möglich ist und ein Produkt mit hochviskosen bis plastischen Eigenschaften erhalten wird. Als Härter werden Dicyandiamide oder das Natriumchlorid-Komplex-Salz von 4,4'-Diaminodiphenylmethan genannt.

Bei derzeit bekannten hitzehärtbaren Polyurethan-Zusammensetzungen stellt sich aber meist das Problem, dass diese in einem relative engen Temperaturfenster ausgehärtet werden müssen. Bei zu tiefen Temperaturen besteht üblicherweise das Risiko, dass der Härter unvollständig umgesetzt wird, was dazu führen kann, dass der Härter als ölige Flüssigkeit aus dem ausgehärteten Produkt austritt. Bei zu hohen Temperaturen besteht dagegen die Gefahr von unerwünschten starken Verfärbungen. Zudem sind Polyurethan-Zusammensetzungen üblicherweise nicht hochtemperaturstabil und beginnen, sich bei Temperaturen von über 180°C bis spätestens über 200°C zu zersetzen. Dies äusserst sich in einem signifikanten Verlust der mechanischen Eigenschaften wie z.B. der Zugfestigkeit.

Bekannte hitzehärtbare Polyurethan-Zusammensetzungen basieren zudem oftmals auf problematischen Substanzen, wie z.B. das gemäss REACH-Verordnung als besonders besorgniserregender Stoff (SVHC) klassierte 4,4'-Methylendianilin, oder sie sind nicht ausreichend lagerstabil.

Es besteht daher nach wie vor Bedarf nach verbesserten Lösungen, welche die genannten Nachteile nicht oder in geringerem Masse aufweisen.

### Darstellung der Erfindung

Aufgabe der Erfindung ist daher die Bereitstellung von verbesserten Lösungen für hitzehärtbare Polyurethan-Zusammensetzungen, die die vorstehend genannten Nachteile überwinden und sich im Besonderen als einkomponentige Kleb- und/oder Dichtstoff-Zusammensetzung eignen. Bevorzugt sollen die Zusammensetzungen in einem möglichst breiten Temperaturfenster aushärtbar sein. Dies im Speziellen so, dass die mechanischen Eigenschaften des ausgehärteten Produkts im Wesentlichen oder zumindest weitgehend unabhängig von Aushärtetemperatur zuverlässig gewährleistet werden können. Weiter wird angestrebt, dass die Zusammensetzungen bei hohen Aushärtetemperaturen möglichst wenig Verfärbungen zeigen und ihre mechanischen Eigenschaften nicht signifikant verlieren, und dass die Zusammensetzungen möglichst stabil gegenüber der Entmischung oder der Segregation von Komponenten sind. Letzteres insbesondere auch bei einer nur teilweisen oder unvollständigen Hitzeaushärtungsreaktion, wie sie z.B. bei zu tiefen Aushärtungstemperaturen auftreten kann. Schliesslich sollen die Zusammensetzungen auch bei höheren Umgebungstemperaturen möglichst lange lagerstabil sein.

Es wurde überraschenderweise festgestellt, dass die Aufgabe durch eine Verwendung gemäss Anspruch 1 gelöst werden kann. Kern der Erfindung ist demnach die Verwendung eines Hydrazids mit einem Schmelzpunkt von mindestens 65°C als Härter für die Hitzehärtung in einer hitzehärtbaren Polyurethan-Zusammensetzung, die ein Prepolymer mit Isocyanat-Endgruppen, erhalten aus mindestens einem Polyisocyanat und mindestens einem Polyol, sowie mindestens ein Epoxidharz umfasst.

Es hat sich gezeigt, dass sich Hydrazide als Härter in 1K Polyurethan-Zusammensetzungen, welche mindestens ein Prepolymer mit Isocyanat-Endgruppen in Kombination mit einem Epoxidharz enthalten, einsetzen lassen und zu unerwarteten Vorteilen führen. So lassen sich lagerstabile 1K Polyurethan-Zusammensetzungen bereitstellen, welche sich als Kleb- und/oder Dichtstoffe eignen und in einem breiten Temperaturfenster, insbesondere im Bereich von 100 - 220°C, gezielt durch Hitzehärtung ausgehärtet werden können und dabei über den gesamten Temperaturbereich ausgehärtet eine ausgezeichnete Mechanik aufweisen und nicht zu Verfärbungen neigen. Die Lagerstabilität ist dabei von Raumtemperatur bis zu 60°C gegeben.

Es wird davon ausgegangen, dass dies darauf zurückzuführen ist, dass die als Härter verwendeten Hydrazide bereits bei vergleichsweise tiefen Aushärtetemperaturen, beginnend oberhalb des Schmelzpunkts des Hydrazids, eine effektive Aushärtung bewirken, ohne dass das mitverwendete Epoxidharz diesen Vorgang negativ beeinflusst. Das Epoxidharz dürfte im Besonderen bei höheren Temperaturen, beispielsweise oberhalb vom 150°C, zur Aushärtung beitragen, indem es mit anderen Bestandteilen der Zusammensetzung, beispielsweise dem Hydrazid, unter Vernetzung reagiert. Überraschend ist dabei unter anderem, dass die erfindungsgemässe Verwendung der Kombination von Hydraziden und Epoxidharz bei der Aushärtung bei hohen Temperaturen in den ausgehärteten Produkten zu weitaus weniger starken Verfärbungen und weitaus besserer Temperaturstabilität der mechanischen Eigenschaften führt, als bei bisher bekannten hitzehärtbaren Polyurethan-Zusammensetzungen.

Zudem sind Zusammensetzungen erhältlich, welche auch bei unvollständigen Hitzeaushärtungsreaktion, wie sie z.B. bei zu tiefen Aushärtungstemperaturen auftreten, stabil gegenüber der Entmischung der Komponenten sind. Im Besonderen kann das Problem des Austretens von öligen Flüssigkeiten aus dem ausgehärteten Produkt wirksam verhindert werden.

Dies dürfte darauf zurückzuführen sein, dass das Hydrazid einen relativ hohen Schmelzpunkt aufweist, welcher dafür sorgt, dass allenfalls nicht umgesetzter Härter, in nicht reagiertem Zustand im ausgehärteten Produkt verbleibt. Selbst wenn somit in der hitzehärtenden Zusammensetzung ein gewisser Anteil des Prepolymers vor der eigentlichen Hitzehärtung durch Feuchtigkeit aushärtet, so dass sich das Verhältnis von verfügbaren Prepolymeren zum Härter verschiebt, stellt der Überschuss an Härter kein Problem hinsichtlich Segregation dar.

Die bei Polyurethan-Zusammensetzungen üblichen Verfärbungen sind vorliegend auch bei hohen Aushärtetemperaturen bis zu 220°C bereits sehr gering und können durch Stabilisatoren, insbesondere Phosphit-Stabilisatoren, zusätzlich weitestgehend vermieden werden.

Die erfindungsgemäss erhältlichen Polyurethan-Zusammensetzungen verfügen im Besonderen über stabile mechanische Eigenschaften über den gesamten Anwendungsbereich und insbesondere bei Aushärtetemperaturen bis 220°C, im Speziellen hinsichtlich dem E-Modul.

Ein weiterer Vorteil der vorliegenden Erfindung besteht darin, dass auf problematische Substanzen, wie z.B. das gemäss REACH-Verordnung als besonders besorgniserregender Stoff (SVHC) klassierte 4,4'-Methylendianilin, verzichtet werden kann bzw. unerwartet vorteilhafte Alternativen bereitgestellt werden.

Zudem haften die erhältlichen Polyurethan-Zusammensetzungen sehr gut auf Metallsubstraten und einer Vielzahl von Beschichtungen, insbesondere auf Beschichtungen wie sie im Fahrzeugbau beispielsweise durch kathodische Tauchlackierung aufgetragen werden.

Die durch die erfindungsgemässe Verwendung erhältlichen Polyurethan-Zusammensetzungen lassen sich unter anderem als Kleb- und Dichtstoffe in der industriellen Fertigung einsetzen, im Besonderen als Dichtstoffe im Fahrzeugbau, wo sie beispielsweise auf frisch lackierten Bauteilen zusammen mit der Lackhärtung im entsprechenden Aushärtungsofen ausgehärtet werden können.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Hydrazids mit einem Schmelzpunkt von mindestens 65°C in Kombination mit einem Epoxidharz als Härter für die Hitzehärtung in einer hitzehärtbaren Polyurethan-Zusammensetzung, die ein Prepolymer mit Isocyanat-Endgruppen aus mindestens einem Polyisocyanat und mindestens einem Polyol umfasst.

Mit "Poly" beginnende Verbindungsnamen bezeichnen Substanzen, die zwei oder mehr der in ihrem Namen vorkommenden funktionellen Gruppen pro Molekül enthalten. Bei den Verbindungen kann es sich um monomere, oligomere oder polymere Verbindungen handeln. Ein Polyol ist z.B. eine Verbindung mit zwei oder mehr Hydroxylgruppen. Ein Polyisocyanat ist eine Verbindung mit zwei oder mehr Isocyanatgruppen.

Isocyanat-reaktive Verbindungen sind Verbindungen, die mindestens eine Isocyanat-reaktive Gruppe aufweisen, die mit Isocyanatgruppen unter Bildung einer chemischen Bindung reagieren kann.

Eine einkomponentige Polyurethan-Zusammensetzung bedeutet eine Zusammensetzung, bei der die Bestandteile in einer Komponente vorliegen. In der Regel ist eine einkomponentige Zusammensetzung bei Raumtemperatur (z.B. 23°C) und, wenn ein feuchtigkeitshärtbares System vorliegt, bei Ausschluss von Luftfeuchtigkeit zumindest über eine gewisse Zeit (z.B. mindestens 1 Tag oder mindestens 1 Monat) lagerstabil.

Der Begriff "lagerstabil" bezeichnet die Eigenschaft einer Substanz oder einer Zusammensetzung, dass sie bei Raumtemperatur in einem geeigneten Gebinde während mehreren Wochen bis 6 Monate und mehr aufbewahrt werden kann, ohne dass sie sich in ihren Anwendungs- oder Gebrauchseigenschaften durch die Lagerung in einem für ihren Gebrauch relevanten Ausmass verändert.

Das mittlere Molekulargewicht bedeutet hier Zahlenmittel des Molekulargewichts (Mn), welches durch Gelpermeationschromatographie (GPC) gegen Polystyrol-Standard ermittelt werden kann.

Unter Hitzehärtung wird die Härtung bei einer erhöhten Temperatur von z.B. mindestens 80°C, insbesondere mindestens 100°C, im Speziellen mehr als 120°C verstanden. Die Hitzehärtung wird insbesondere bei einer Temperatur oberhalb des Schmelzpunkts des Hydrazids durchgeführt.

Bei der Hitzehärtung wird die Polyurethan-Zusammensetzung nach der Applikation gleichzeitig überall gehärtet. Dagegen erfolgt bei der Feuchtigkeitshärtung eine diffusionsgesteuerte Härtung der Polyurethan-Zusammensetzung nach der Applikation von außen nach innen. Unter Feuchtigkeitshärtung wird die Härtung unter Feuchtigkeit, insbesondere Luftfeuchtigkeit, verstanden. Die Feuchtigkeitshärtung wird in der Regel bei einer Temperatur von nicht mehr als 40°C durchgeführt, wobei die Feuchtigkeitshärtung gewöhnlich bei Raumtemperatur durchgeführt wird, also z.B. bei Temperaturen unter 35°C, z.B. bei etwa 23°C.

Alle folgenden Angaben, insbesondere zur Polyurethan-Zusammensetzung, zum Verfahren und zu den Verwendungen, gelten naturgemäss für die erfindungsgemäße Verwendung, das erfindungsgemäße Verfahren, die daraus erhältlichen Produkte und die erfindungsgemässen Kleb- und/oder Dichtstoff-Zusammensetzungen gleichermassen, auch wenn darauf nicht eigens hingewiesen wird.

Die erfindungsgemäße Polyurethan-Zusammensetzung umfasst ein Prepolymer mit Isocyanat-Endgruppen aus mindestens einem Polyisocyanat, und mindestens einem Polyol. Es können auch Mischungen von zwei oder mehr solcher Prepolymere verwendet werden. Prepolymere mit Isocyanat-Endgruppen sind dem Fachmann bekannt. Das Prepolymer weist mindestens zwei Isocyanat-Endgruppen und vorzugsweise genau zwei Isocyanat-Endgruppen auf. Über die Isocyanat-Endgruppen kann das Prepolymer durch Reaktion mit Verbindungen, die Isocyanat-reaktive Gruppen, wie z.B. Wasser, Hydroxylgruppen oder Aminogruppen, aufweisen, kettenverlängert bzw. vernetzt werden, was die Härtung der Polyurethan-Zusammensetzung bewirkt. Die Ausdrücke "Härtung" oder "Vernetzung" schließen hier im Folgenden auch Kettenverlängerungsreaktionen ein

Bei dem Prepolymer mit Isocyanat-Endgruppen aus mindestens einem Polyisocyanat und mindestens einem Polyol handelt es sich um ein Polyurethan-Prepolymer, das durch Umsetzung von mindestens einem Polyisocyanat und mindestens einem Polyol hergestellt wird. Der Fachmann kann solche Prepolymere ohne weiteres herstellen.

Die Umsetzung des mindestens einen Polyols mit mindestens einem Polyisocyanat kann z.B. dadurch erfolgen, dass die Polyol-Komponente und die Polyisocyanat-Komponente mit üblichen Verfahren, z.B. bei Temperaturen von 50 bis 100 °C, gegebenenfalls unter Anwesenheit eines geeigneten Katalysators, zur Reaktion gebracht werden, wobei das Polyisocyanat im stöchiometrischen Überschuss eingesetzt wird. Zur Reaktionsmischung können gegebenenfalls nach Bedarf Zusatzstoffe wie Lösemittel und/oder Weichmacher zugesetzt werden. Als Reaktionsprodukt entsteht das Prepolymer mit Isocyanatendgruppen. Lösemittel, falls eingesetzt, können nach der Umsetzung wieder entfernt werden. Weichmacher, sofern eingesetzt, können vorzugsweise im erhaltenen Produkt verbleiben.

Bei dem Polyisocyanat zur Bildung des Prepolymers mit Isocyanat-Endgruppen handelt es sich bevorzugt um ein Polyisocyanat, insbesondere ein Diisocyanat, das aus aliphatischen Polyisocyanaten und/oder aromatische Polyisocyanaten ausgewählt ist. Es können ein solches Polyisocyanat oder zwei oder mehr solche Polyisocyanate eingesetzt werden. Bevorzugt ist ein aliphatisches Polyisocyanat.

Ein aliphatisches Polyisocyanat ist eine aliphatische Verbindung, die mindestens zwei Isocyanatgruppen aufweist. Bevorzugt ist ein aliphatisches Diisocyanat. Es kann sich um ein acyclisches oder cyclisches aliphatisches Polyisocyanat handeln, wobei ein cyclisches aliphatisches Polyisocyanat bevorzugt ist. Vorzugsweise handelt es sich um ein gesättigtes aliphatisches Polyisocyanat. Diese Polyisocyanate sind bekannt und im Handel erhältlich.

Beispiele für ein geeignetes aliphatisches Polyisocyanat sind 1,6-Hexamethylendiisocyanat, 2,2,4- und 2,4,4-Trimethyl-1,6-hexamethylendiisocyanat, 1,12-Dodecamethylendiisocyanat, Cyclobutan-1,3-diisocyanat, Cyclohexan-1,3- und 1,4-diisocyanat und Mischungen dieser Isomere, Isophorondiisocyanat (IPDI, 1-Isocyanato-3,3,5-trimethyl-5-isocyanatomethyl-cyclohexan), 2,4- und 2,6-Hexahydrotoluylendiisocyanat, Hexahydro-1,3- und -1,4-phenyl-diisocyanat, Perhydro-2,4'- und -4,4'-diphenylmethandiisocyanat, und Mischungen der vorgenannten Isocyanate. Besonders bevorzugt ist Isophorondiisocyanat (IPDI) und Hexamethylen-1,6-diisocyanat (HDI).

Beispiele für ein geeignetes aromatisches Polyisocyanat sind 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), und/oder Naphthalin-1,5-diisocyanat (NDI).

Besonders bevorzugt als Polyisocyanat sind 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI) und/oder Isophorondiisocyanat (IPDI).

Zur Bildung des Prepolymers mit Isocyanat-Endgruppen wird das mindestens eine Polyisocyanat mit einem oder mehreren Polyolen umgesetzt. Es können alle Polyole eingesetzt werden, die für die Polyurethanchemie üblich sind. Geeignete Polyole sind in großer Vielfalt im Handel erhältlich.

Das Polyol weist bevorzugt ein mittleres Molekulargewicht bzw., sofern es sich um ein nicht polymeres Polyol handelt, ein Molekulargewicht von 250 bis 30.000 g/mol und bevorzugt von 400 bis 20.000 g/mol auf.

Das Polyol weist ferner bevorzugt eine mittlere OH-Funktionalität im Bereich von 1.6 bis 3 auf. Es versteht sich, dass polymere Verbindungen auch aus Nebenreaktionen gebildete Substanzen enthalten können, die z.B. nur eine oder keine Hydroxygruppe aufweisen.

Bevorzugt ist das Polyol ein Diol oder Triol mit einer OH-Zahl im Bereich von 8 bis 185 mg KOH/g, insbesondere im Bereich von 10 bis 120 mg KOH/g.

Als Polyole können beispielsweise die folgenden handelsüblichen Polyole oder Mischungen davon eingesetzt werden:
a) Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, z.B. hergestellt mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad kleiner als 0,02 mEq/g und mit einem mittleren Molekulargewicht im Bereich von 1.000 bis 30.000 g/mol, sowie Polyoxypropylendiole und -triole mit einem mittleren Molekulargewicht von 400 bis 8.000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
b) Styrol-Acrylnitril- oder Acrylnitril-Methylmethacrylat-gepfropfte Polyetherpolyole.
c) Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
d) Polycarbonatpolyole, wie sie z.B. durch Umsetzung der oben genannten - zum Aufbau der Polyesterpolyole eingesetzten - Alkohole mit Dialkylcarbonaten, Diarylcarbonaten oder Phosgen zugänglich sind.
e) Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
f) Polyacrylat- und Polymethacrylatpolyole.
g) Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
h) Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren hergestellt werden können; sowie hydrierte polyhydroxyfunktionelle Polymere oder Copolymere von Dienen.

Bevorzugt liegt das NCO/OH-Verhältnis bei der Umsetzung zwischen Polyisocyanat und dem Polyol im Bereich von 2/1 bis 10/1, besonders bevorzugt im Bereich von 3/1 bis 8/1, insbesondere im Bereich von 4/1 bis 7/1.

Bevorzugt hat das Prepolymer einen NCO-Gehalt im Bereich von 0.5 bis 10 Gewichts-%, bevorzugt 0.6 bis 8.4 Gewichts-%, insbesondere 0.8 bis 7 Gewichts-%.

Insbesondere verfügt das Prepolymer mit Isocyanat-Endgruppen aus mindestens einem Polyisocyanat und mindestens einem Polyol über einen Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%.

Als Prepolymere werden bevorzugt solche verwendet, welche mit Isophorondiisocyanat (IPDI) und/oder 2,2'-Diphenylmethandiisocyanat (MDI) gebildet werden; wobei das Prepolymer über einen Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%, aufweist.

Ein solches Prepolymer ist besonders geeignet für die Herstellung von Zubereitungen, wie insbesondere elastische Klebstoffe, Dichtstoffe und Beschichtungen, welche einen Gehalt an monomeren Polyisocyanaten, insbesondere monomeren Diisocyanaten, von weniger als 0.1 Gewichts-% aufweisen; diese sind auch ohne besondere Schutzvorkehrungen sicher in der Handhabung und können damit in vielen Ländern ohne Gefahrenkennzeichnung verkauft werden.

Es hat sich zudem gezeigt, dass Prepolymere mit einem niederen Anteil an monomeren Polyisocyanaten bei der Verwendung mit den erfindungsgemäss verwendeten Härtern besonders vorteilhafte Polyurethan-Zusammensetzungen ergeben, bei welchen die erfindungsgemässen Vorteile im Besonderen Masse zum Vorschein kommen. Insbesondere im Fall von MDI-basierten Prepolymeren ist es vorteilhaft, die nach der Herstellung überschüssigen MDI-Monomere zu entfernen, da diese sonst die Aushärtung des Isocyanatgruppen-haltigen Polymers mit dem Hydrazid beeinflussen können, indem sie diese verlangsamen, insbesondere in Ausführungsformen, in denen das Hydrazid bereits durch MDI beschichtet ist, wie weiter unten beschrieben. Im Fall von IPDI- oder TDI-basierten Prepolymeren hat die Anwesenheit von restlichen monomeren Diisocyanaten jedoch keinen Einfluss auf die Aushärtung.

Die Umsetzung zwischen dem Polyisocyanat und dem Polyol wird bevorzugt unter Feuchtigkeitsausschluss bei einer Temperatur im Bereich von 20 bis 160 °C, insbesondere 40 bis 140 °C, durchgeführt, gegebenenfalls in Anwesenheit geeigneter Katalysatoren.

Nach der Umsetzung kann das im Reaktionsgemisch verbleibende monomere Polyisocyanat, insbesondere das verbleibende monomere Diisocyanat, bis auf den beschriebenen Restgehalt mittels eines geeigneten Trennverfahrens entfernt werden.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Polyisocyanat oder Diisocyanat in einem Kurzwegverdampfer bei einer Manteltemperatur im Bereich von 120 bis 200 °C und einem Druck von 0.001 bis 0.5 mbar entfernt wird.

Im Fall des bevorzugten IPDI als monomeres Diisocyanat liegt die Manteltemperatur bevorzugt im Bereich von 140 bis 180°C.

Bevorzugt erfolgt die Umsetzung des monomeren Polyisocyanat, insbesondere des monomeren Diisocyanats, und des Polyols und das anschliessende Entfernen des im Reaktionsgemisch verbliebenen monomeren Polyisocyanat ohne Einsatz von Lösemitteln und/oder Schleppmitteln.

Bevorzugt wird das nach der Umsetzung entfernte monomere Polyisocyanat anschliessend wiederverwendet, d.h. erneut für die Herstellung von Isocyanatgruppen-haltigem Polymer eingesetzt.

Bei der Umsetzung reagieren die OH-Gruppen des Polyols mit den Isocyanatgruppen des monomeren Polyisocyanat, insbesondere des monomeren Diisocyanats. Dabei kommt es auch zu sogenannten Kettenverlängerungsreaktionen, indem OH-Gruppen und/oder Isocyanatgruppen von Umsetzungsprodukten zwischen Polyol und monomerem Polyisocyanat reagieren. Je höher das NCO/OH-Verhältnis gewählt wird, desto weniger Kettenverlängerungsreaktionen finden statt, und desto niedriger ist die Polydispersität und somit die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Polyisocyanat.

Bevorzugt hat das Isocyanatgruppen-haltige Polymer mit niedrigem Gehalt an monomeren Polyisocyanat eine Viskosität bei 20 °C von höchstens 50 Pa·s, insbesondere höchstens 40 Pa·s, besonders bevorzugt höchstens 30 Pa·s. Dabei wird die Viskosität bestimmt mit einem Kegel-Platten-Viskosimeter mit einem Kegeldurchmesser 25 mm, Kegelwinkel 1°, Kegelspitze-PlattenAbstand 0.05 mm bei einer Scherrate von 10 s⁻¹.

Mit den bevorzugten Isocyanatgruppen-haltigen Polymeren bzw. Prepolymeren können hochwertige, gut verarbeitbare hitzehärtende und Polyurethan-Zusammensetzungen erhalten werden.

Ein besonders bevorzugtes Prepolymer mit niedrigem Gehalt an monomeren Polyisocyanaten hat einen NCO-Gehalt im Bereich von 1 bis 2.5 Gewichts-%, bevorzugt 1.1 bis 2.1 Gewichts-%, bezogen auf alle Repetiereinheiten im Polyethersegment; 80 bis 100 Gewichts-%, insbesondere 80 bis 90 Gewichts-%, 1,2-Propylenoxy-Gruppen und 0 bis 20 Gewichts-%, insbesondere 10 bis 20 Gewichts-%, 1,2-Ethylenoxy-Gruppen; einen Gehalt an monomerem Polyisocyanat von höchstens 0.3 Gewichts-% und ist erhalten aus der Umsetzung von IPDI mit einem Polyether-Triol mit einer mittleren OH-Funktionalität im Bereich von 2.2 bis 3, bevorzugt 2.2 bis 2.8, insbesondere 2.2 bis 2.6 und einer OH-Zahl im Bereich von 10 bis 42 mg KOH/g, insbesondere 20 bis 35 mg KOH/g.

Ein weiteres besonders bevorzugtes Prepolymer mit niedrigem Gehalt an monomeren Polyisocyanaten hat einen NCO-Gehalt im Bereich von 2.8 bis 7 Gewichts-%, bezogen auf alle Repetiereinheiten im Polyethersegment; 100 % Propylenoxy-Gruppen, einen Gehalt an monomerem Polyisocyanat von höchstens 0.3 Gewichts-% und ist erhalten aus der Umsetzung von IPDI mit mindestens einem PolyetherDiol mit einer OH-Zahl im Bereich von 44 bis 120 mg KOH/g.

Der Anteil an Prepolymer mit Isocyanat-Endgruppen aus mindestens einem Polyisocyanat und mindestens einem Polyol in der Polyurethan-Zusammensetzung kann z.B. im Bereich von 10 bis 90 Gew.-%, insbesondere von 15 -70 Gew.-%, bevorzugt 20 - 50 Gew.-%, im Besonderen 25 - 45 Gew.-%, liegen.

Vorliegend wird ein Hydrazid in Kombination mit dem Epoxidharz gezielt als Härter verwendet.

Hydrazide sind eine Klasse von Verbindungen, die eine funktionelle Gruppe haben, in der zwei Stickstoff-Atome über eine kovalente Bindung verknüpft sind. Im Besonderen handelt es sich bei den Hydraziden vorliegend um organische Hydrazide. Dies sind typischerweise Derivate von organischen Säuren, wie beispielsweise Carbonsäuren und/oder Sulfonsäuren. Carbonsäurehydrazide tragen als Substituent nebst wenigstens einer Hydrazidgruppe mindestens eine Acylgruppe während Sulfonsäurehydrazide als Substituent nebst wenigstens einer Hydrazidgruppe mindestens eine Sulfonylgruppe tragen.

Insbesondere ist das verwendete Hydrazid partikelförmig, bevorzugt pulverförmig. Gemäss einer vorteilhaften Ausführungsform liegt das Hydrazid als Pulver mit einem D50-Wert der Partikelgrösse von ≤50 µm, insbesondere ≤20 µ m, bevorzugt ≤10 µm, besonders bevorzugt ≤7.5 µ m, am meisten bevorzugt ≤5 µm vor. Die Angabe der Partikelgrösse D50 bezieht sich dabei darauf, dass 50 Gew.- % der Teilchen eine Grösse aufweisen, welche gleich oder kleiner ist als der angegebene Wert. Die Partikelgrösse D50 kann typischerweise durch Laserlichtstreuung gemäss der Norm ISO 13320:2020, beispielsweise mit dem Gerät CILAS 920 der Firma CILAS bestimmt werden.

Das Hydrazid wird bei der erfindungsgemässen Verwendung mit dem Prepolymer vermischt, bevorzugt so, dass das Hydrazid gleichmässig im Prepolymer verteilt ist. Im Besonderen bildet das Prepolymer vor der Härtung eine kontinuierliche Phase in welcher das partikelförmige Hydrazid dispergiert ist.

Das Hydrazid wird vorzugsweise mit einem Anteil von 1.5 - 10 Gewichtsteilen, bevorzugt 2.0 - 7.5 Gewichtsteilen, im Besonderen 2.5 - 5.5 Gewichtsteilen verwendet, bezogen auf ein Gewichtsteil Isocyanatgruppen im Prepolymer enthalten in der hitzehärtbaren Polyurethan-Zusammensetzung. Dies bedeutet beispielsweise, dass bei Verwendung von 100 Gramm eines Prepolymers mit einem NCO-Gehalt von 2 Gew.-% vorzugsweise zwischen 3 und 20 Gramm Hydrazid eingesetzt werden.

Das Hydrazid wird vorzugsweise mit einem Anteil von 0.5 - 15, Gew.-%, bevorzugt 1 - 10 Gew.-%, im Besonderen 1.5 - 23.0 Gew.-%, bezogen auf das Gesamtgewicht der hitzehärtbaren Polyurethan-Zusammensetzung verwendet.

In einer bevorzugten Ausführungsform ist das Hydrazid mit einem Isocyanat-Monomer, insbesondere mit einem Diisocyanat-Monomer, im Speziellem mit Diphenylmethandiisocyanat-Monomer beschichtet. Im Besonderen handelt es sich beim Isocyanat-Monomer um 4,4'-Diphenylmethandiisocyanat, gegebenenfalls mit Anteilen von 2,4'- und/oder 2,2' Diphenylmethandiisocyanat. Die Beschichtung des Isocyanat-Monomers bildet insbesondere eine Verkapselung für das Hydrazid. Durch das Isocyanat-Monomer kann die Aktivierungstemperatur und Lagerstabilität der Polyurethan-Zusammensetzungen kontrolliert, insbesondere erhöht, werden.

Falls verwendet, ist das zur Beschichtung eingesetzte Isocyanat-Monomer insbesondere chemisch an das Hydrazid gebunden. Entsprechend handelt es sich nicht um freies Isocyanat-Monomer. Die Beschichtung kann z.B. durch Vermischung des Hydrazids mit dem Isocyanat-Monomer erfolgen. Dies insbesondere vor der Vermischung mit den übrigen Komponenten der hitzehärtbaren Polyurethan-Zusammensetzung.

Das Isocyanat-Monomer verfügt insbesondere über einen Anteil von 0.01 - 1, Gew.-%, bevorzugt 0.02 - 1 Gew.-%, im Besonderen 0.1 - 0.3 Gew.-%, bezogen auf das Gesamtgewicht der hitzehärtbaren Polyurethan-Zusammensetzung.

Das Gewichtsverhältnis von Isocyanat-Monomer zu Hydrazid liegt bevorzugt im Bereich von 0.01 - 0.20, insbesondere 0.03 - 0.15, im Speziellen 0.05 - 0.12.

Diese Anteile und Verhältnisse haben sich als besonders vorteilhaft erwiesen, um die Aktivierungstemperatur und Lagerstabilität der Polyurethan-Zusammensetzungen in den praxisrelevanten Bereichen zu kontrollieren.

Es kann aber auch auf Isocyanat-Monomere verzichtet werden. In diesem Fall ist das Hydrazid in der Polyurethan-Zusammensetzung bevorzugt in direkten Kontakt mit dem Prepolymer. Entsprechend liegt das Hydrazid in diesem Fall in freier und/oder unverkapselter Form vor. Ein direkter Kontakt zwischen Hydrazid und Prepolymer hat den Vorteil, dass die Hitzehärtung unmittelbar mit der Verflüssigung des Hydrazids aktiviert werden kann, wodurch eine gezielte und rasche Aushärtung ermöglicht wird.

Besonders bevorzugt weist das Hydrazid einen Schmelzpunkt von mindestens 75°C, bevorzugt mindestens 100°C, im Speziellen mindestens 110°C, insbesondere mindestens 120°C, besonders bevorzugt mindestens 150°C. Damit können besonders grosse Lagerstabilitäten erreicht werden und zugleich wird die Segregation bei nur teilweise umgesetztem Härter effektiv reduziert.

Gemäss einer besonders bevorzugten Ausführungsform umfasst das Hydrazid ein Dihydrazid, oder es besteht daraus.

Das Hydrazid ist bevorzugt ein Hydrazid einer Carbon- und/oder einer Sulfonsäure. Insbesondere handelt es sich um ein Hydrazid der Formel (la) oder (Ib) oder (Ic): 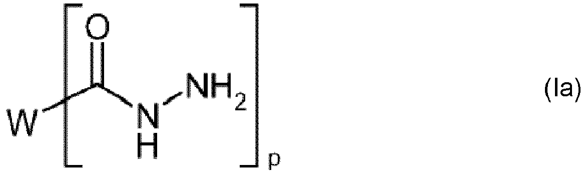 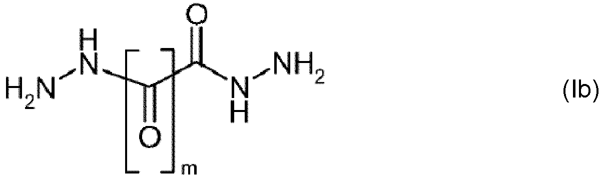 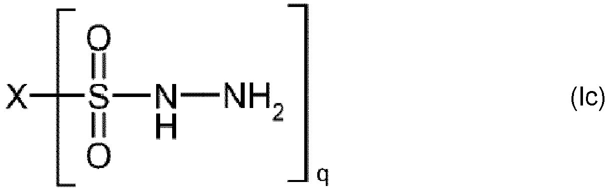 wobei:
W für den p-wertigen Rest einer Carbonsäure nach Entfernung von p Carbonsäuregruppen steht;
X für den q-wertigen Rest einer Sulfonsäure nach Entfernung von q Sulfonsäuregruppen steht;
m für 0 oder 1 steht;
p für 1, 2, 3 oder 4, bevorzugt für 2, steht; und
q für 1, 2, 3 oder 4 steht.

Im Besonderen ist das Hydrazid ein Carbonsäurehydrazid, insbesondere ein Carbonsäuredihydrazid, bevorzugt ausgewählt aus der Gruppe bestehend aus Carbodihydrazid, Oxalsäuredihydrazid, Bernsteinsäuredihydrazid, Adipinsäuredihydrazid, Korksäuredihydrazid, Azelainsäuredihydrazid, Sebacinsäuredihydrazid, Dodecansäuredihydrazid und Isophtalsäuredihydrazid, meist bevorzugt Adipinsäuredihydrazid.

Mit derartigen Hydraziden, welche kommerziell bei verschiedenen Anbietern erhältlich sind, lassen sich unter anderem Polyurethan-Zusammensetzungen mit Anwendungsbereichen in breiten Temperaturfenstern herstellen.

Geeignete und bevorzugte kommerziell erhältliche Hydrazide sind beispielsweise AJICURE^{®} VDH (von Venture Chemical Ltd.) oder Technicure^{®} ADH (von A&C Catalysts).

Weiter ist es bevorzugt, wenn die Polyurethan-Zusammensetzung frei von mittels Aldehyd und/oder Keton blockierten Aminen ist. Im Besonderen ist die Polyurethan-Zusammensetzung frei von Aldiminen, Ketiminen, Enaminen und/oder Oxazolidinen. Damit kann im Besonderen die Gefahr reduziert werden, dass es zu unerwünschten Ausgasungen von Aldehyden und/oder Ketonen, kommt.

Als Epoxidharz geeignet sind übliche technische Epoxidharze. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Insbesondere handelt es sich beim Epoxidharz um ein Polyepoxid.

Als Epoxidharz besonders geeignet sind sogenannte Polyepoxid-Flüssigharze, im Folgenden als "Flüssigharz" bezeichnet. Diese weisen eine Glasübergangstemperatur unterhalb von 25°C auf. Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen. Allerdings sind flüssige Epoxidharze bevorzugt.

Geeignete Epoxidharze sind insbesondere Epoxidharze der Formel (I):

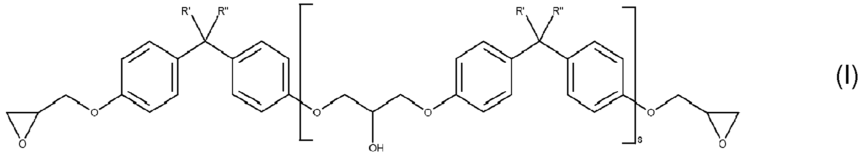

Hierbei stehen die Substituenten R' und R" unabhängig voneinander entweder für H oder CH₃. Der Index s steht für einen Wert von 0 bis 20.

Verbindungen der Formel (I) mit einem Index s von > 1.5, insbesondere von 2 bis 12 werden als Epoxid-Festharze bezeichnet. Derartige Epoxid-Festharze sind kommerziell erhältlich beispielsweise von Dow Chemical oder Huntsman oder Hexion.

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Epoxid-Festharze betrachtet. Der Begriff "Epoxid-Festharz" ist dem Epoxid-Fachmann bestens bekannt und wird im Gegensatz zu "Epoxid-Flüssigharzen" verwendet.

Verbindungen der Formel (I) mit einem Index s zwischen 0 bis 1 sind Epoxid-Flüssigharze. Bevorzugt steht s dabei für einen Wert von kleiner als 0.2.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;

- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).
   Weitere geeignete Epoxidharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt ist ein Flüssigharz, insbesondere ein Flüssigharz auf der Basis eines Bisphenols.

Als Epoxidharz am meisten bevorzugt ist ein Flüssigharz auf der Basis eines Bisphenol-A-, Bisphenol-F- oder Bisphenol-A/F-Diglycidylethers. Solche Flüssigharze sind kommerziell beispielsweise von Dow, Huntsman oder Momentive erhältlich. Diese Epoxidharze weisen eine gut handhabbare Viskosität auf und ermöglichen hohe Festigkeiten und Beständigkeiten. Solche Flüssigharze können auch Anteile von Bisphenol A-Festharz oder Phenol-Novolaken enthalten.

Ein Epoxid-Equivalenzgewicht (EEW) des Epoxidharzes beträgt im Speziellen 100 g/eq - 500 g/eq, insbesondere 130 g/eq - 250 g/eq. Das Epoxid-Equivalenzgewicht ist dabei insbesondere gemessen nach Norm ASTM D1652-11(2019).

Solche Epoxidharze reagieren bei höheren Temperaturen, z.B. ab 150°C, und führen dabei zu einer weiteren Vernetzung der Polyurethan-Zusammensetzung.

Das Epoxidharz wird insbesondere mit einem Anteil von 0.1 - 15 Gew.-%, bevorzugt 1 - 10 Gew.-%, im Besonderen 1.5 - 5 Gew.-%, meist bevorzugt 2 - 4 Gew.-%, bezogen auf das Gesamtgewicht der hitzehärtbaren Polyurethan-Zusammensetzung verwendet.

Insbesondere wird in der Polyurethan-Zusammensetzung kein Epoxid-Amin-Addukt, im Speziellen kein Epoxid-Amin-Addukt welches erhältlich ist durch Umsetzen eines Bisphenoldiglycidylethers mit einem aliphatischen Polyamin, verwendet und/oder die Polyurethan-Zusammensetzung enthält kein solches Epoxid-Amin-Addukt. Das aliphatische Polyamin ist dabei insbesondere ein Diamin, im Speziellen ein Diamin mit einer primären Amingruppe und einer sekundären Amingruppe und/oder ein Diamin mit einer primären Amingruppe und einer tertiären Amingruppe. Im Speziellen handelt es sich beim nicht verwendeten Epoxid-Amin-Addukt um ein solches wie es in der EP 0 365 984 A2, auf Seite 5, Zeilen 8 - 16 beschrieben ist. Solche Addukte sind für die vorliegende erfindungsgemässe Zusammensetzung nicht geeignet.

Die erfindungsgemäße Polyurethan-Zusammensetzung kann gegebenenfalls ferner ein oder mehrere weitere, in der Polyurethanindustrie üblicherweise eingesetzte Hilfs- und Zusatzstoffe als Additive enthalten.

Beispiele für solche Additive sind Weichmacher; Lösemittel; anorganische und organische Füllstoffe, z.B. gemahlene oder gefällte Calciumcarbonate, Russe, Kaoline, Aluminiumoxide, Kieselsäuren und/oder PVC-Pulver; Fasern, z.B. aus Polyethylen; Pigmente; Rheologie-Modifizierer, z.B. Thixotropiehilfsmittel, Verdickungsmittel, wie Harnstoffverbindungen, Polyamidwachse, Bentonite oder pyrogene Kieselsäuren; Haftvermittler, insbesondere Silane, wie Epoxysilane, Vinylsilane und Isocyanatosilane; Trocknungsmittel, z.B. p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie z.B. Netzmittel, Verlaufsmittel, Entlüftungsmittel oder Entschäumer; und Fungizide oder das Pilzwachstum hemmende Substanzen.

Die Additive können bei Bedarf und je nach Anwendungszweck in geeigneten Mengen in üblicher Weise zugesetzt werden. In der Regel ist es bevorzugt, dass die Polyurethan-Zusammensetzung mindestens einen Weichmacher und/oder mindestens einen Füllstoff enthält.

Der Weichmacher ist beispielsweise ausgewählt aus Carbonsäureester wie Phthalate, insbesondere Diisononylphthalat (DINP), Diisodecylphthalat (DIDP) und/oder Di(2-propylheptyl)phthalat (DPHP); hydrierte Phthalate, insbesondere hydriertes Diisononylphthalat (DINCH); Terephthalate, insbesondere Dioctylterephthalat; Trimellitate, insbesondere Trioctyltrimellitat; Adipate, insbesondere Dioctyladipat; Azelate; Sebacate; Polyole, insbesondere Polyoxyalkylenpolyole und/oder Polyesterpolyole; Benzoate; Glykolether; Glykolester; organische Phosphor-, Phosphon- und/oder Sulfonsäureester; Polybutene, Polyisobutene; und/oder von natürlichen Fetten oder Ölen abgeleitete Weichmacher, insbesondere epoxidiertes Soja- und/oder Leinöl.

Der Weichmacher weist vorzugsweise bei 20°C einen Dampfdruck von weniger als 0.1 mbar auf und/oder der Weichmacher weist bei Normaldruck von 101.325 kPa einen Siedepunkt von wenigstens 250°C, bevorzugt wenigstens 300°C, im Speziellen wenigstens 350°C, auf. Damit kann insbesondere verhindert, dass die Weichmacher bei höheren Aushärtetemperaturen, z.B. ab 180°C, zu stark ausgasen.

Besonders bevorzugt ist der Weichmacher ausgewählt aus Phthalaten und/oder Trimellitaten, insbesondere Diisodecylphthalat (DIDP) und/oder Trioctyltrimellitat. Diese haben sich für die vorliegenden hitzehärtbaren Polyurethan-Zusammensetzung als besonders vorteilhaft erwiesen.

Der Weichmacher wird vorzugsweise mit einem Anteil von 0.1 - 30 Gew.-%, bevorzugt 5 - 25 Gew.-%, im Besonderen 10 - 20 Gew.-%, bezogen auf das Gesamtgewicht der hitzehärtbaren Polyurethan-Zusammensetzung verwendet.

Weiter bevorzugt enthält die hitzehärtbare Polyurethan-Zusammensetzung einen oder mehrere Stabilisatoren gegen Wärme, Sauerstoff, Feuchtigkeit, Licht und/oder UV-Strahlung. Geeignete Stabilisatoren sind beispielsweise gehinderte Amine (HALS-Stabilisatoren), gehinderte Phenole, Phosphite und/oder aromatische Amine. Solche Stabilisatoren sind z. B. unter den Produktnamen IRGANOX, KINOX, DOVERNOX, WESTON, IRGAPHOS, DOVERPHOS und/oder IONOL kommerziell erhältlich.

Speziell bevorzugt als Stabilisatoren sind Phosphite, insbesondere Organophosphite. Organophosphite, auch als Phosphitester bezeichnet, weisen insbesondere eine oder mehrere Gruppen der Formel (II) auf:

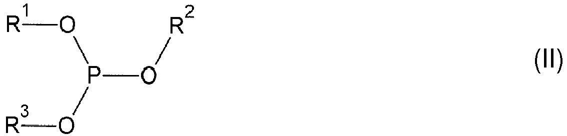

Dabei stehen R¹, R² und R³ je unabhängig voneinander für einen organischen Rest, beispielsweise mit 1 - 25 Kohlenstoffatomen. Die organischen Reste können dabei ein oder mehrere Heteroatome aufweisen oder ausschliesslich aus Kohlenstoff- und Wasserstoffatomen bestehen.

Bevorzugt umfasst wenigstens einer der Reste R¹, R² und R³ eine aromatische Gruppe.

Im Besonderen handelt es sich beim Stabilisator um ein Organodiphosphit, welches zwei Gruppen der Formel II aufweist.

Solche Phosphit-Stabilisatoren sind z.B. unter dem Namen DOVERPHOS^{®} kommerziell erhältlich.

Es hat sich überraschend gezeigt, dass mit Phosphiten allfällige Verfärbungen von Polyurethan-Zusammensetzungen, welche vorliegend auch bei Aushärtetemperaturen von 200°C und mehr typischerweise sehr gering sind, weiter vermindert werden können. Im Gegensatz dazu eignen sich Stabilisatoren in Form von Phenolen zur Stabilisierung bei solch hohen Aushärtetemperaturen weniger gut.

Die Anteile der Bestandteile in der Polyurethan-Zusammensetzung können in weiten Bereichen je nach eingesetzten Bestandteilen und Verwendungszweck variieren. Die nachstehenden Mengenangaben für zweckmässige und bevorzugte Ausführungsformen beziehen sich auf das Gesamtgewicht der Polyurethan-Zusammensetzung.

Besonders bevorzugt weist die hitzehärtbare Polyurethan-Zusammensetzung folgende Komponenten bezogen auf das Gesamtgewicht der hitzehärtbaren Polyurethan-Zusammensetzung auf:
a) 0.5 - 15, Gew.-%, bevorzugt 1 - 10 Gew.-%, im Besonderen 1.5 - 3.0 Gew.-%, des Hydrazids;
b) 0.1 - 15 Gew.-%, bevorzugt 1 - 10 Gew.-%, im Besonderen 2 - 5 Gew.-%, des Epoxidharzes;
c) 15 - 70 Gew.-%, bevorzugt 20 - 50 Gew.-%, im Besonderen 25 - 40 Gew.-%, des Prepolymers;
d) 0 - 1, Gew.-%, bevorzugt 0.02 - 1 Gew.-%, im Besonderen 0.1 - 0.3 Gew.-%, des Isocyanat-Monomers;
e) 0 - 70 Gew.%, bevorzugt 10 - 60 Gew.-%, im Besonderen 40 - 50 Gew.-%, anorganische und/oder organische Füllstoffe, insbesondere wie vorstehend beschrieben;
f) 0 - 30 Gew.-%, bevorzugt 5 - 25 Gew.-%, im Besonderen 10 - 20 Gew.-%, Weichmacher, insbesondere wie vorstehend beschrieben;
g) 0 - 5 Gew.-%; bevorzugt 0.5 - 4 Gew.-%, im Besonderen 1 - 3 Gew.-%, Stabilisatoren, insbesondere wie vorstehend beschrieben, bevorzugt Phosphite;
h) 0 - 1 Gew.-%, bevorzugt 0.01 - 0.8 Gew.-%, im Besonderen 0.05 - 0.6 Gew.-%, Katalysatoren;
i) Optional ein oder mehrere zusätzliche Additive, deren Anteile sich auf 100 Gew.-% ergänzen.

Das Prepolymer sowie die eingesetzten weiteren Komponenten der Zusammensetzung können in beliebiger Reihenfolge miteinander vermischt werden, um die Polyurethan-Zusammensetzung zu erhalten. Einige Komponenten, wie z.B. das Hydrazid, welches gegebenenfalls mit dem Isocyanat-Monomer beschichtet ist, können z.B. auch als Mischung mit einem Weichmacher zugegeben werden. Die Vermischung kann bei Raumtemperatur (z.B. 23°C) erfolgen. Sie kann z.B. auch für eine leichtere Homogenisierung bzw. Dispergierung teilweise oder vollständig bei leicht erhöhter Temperatur durchgeführt werden. Als Mischvorrichtungen können alle auf diesem Gebiet bekannten Mischvorrichtungen eingesetzt werden. Die Viskosität kann unter Berücksichtigung der beabsichtigen Verwendung beliebig eingestellt werden, z.B. kann die Polyurethan-Zusammensetzung pastös sein und bevorzugt strukturviskose Eigenschaften aufweisen.

Gegenstand der Erfindung ist auch eine hitzehärtbare Polyurethan-Zusammensetzung wie sie bei der erfindungsgemässen Verwendung erhalten wird.

Mit anderen Worten handelt es sich um eine hitzehärtbare Polyurethan-Zusammensetzung umfassend: (i) ein Prepolymer mit Isocyanat-Endgruppen aus mindestens einem Polyisocyanat und mindestens einem Polyol, (ii) ein Hydrazid und (iii) ein Epoxydharz. Optional können zusätzlich eine oder mehrere der vorstehend beschriebenen weiteren Komponenten vorliegen.

Alle vorstehenden Angaben und Erläuterungen zur erfindungsgemässen Verwendung und der hitzehärtbaren Polyurethan-Zusammensetzung, z.B. bezüglich geeigneter Komponenten usw., gelten entsprechend.

Die hitzehärtbare Polyurethan-Zusammensetzung kann eine multikomponentige, z.B. zweikomponentige, hitzehärtbare Polyurethan-Zusammensetzung sein. Bevorzugt handelt es sich aber um eine einkomponentige hitzehärtbare Polyurethan-Zusammensetzung.

Die Polyurethan-Zusammensetzung, vorzugsweise die einkomponentige Polyurethan-Zusammensetzung, eignet sich ganz allgemein zum Verkleben von einem oder mehreren Materialien gleicher oder ungleicher Beschaffenheit und insbesondere für die Verklebung im Fahrzeugbau oder bei der Fahrzeugreparatur. Ebenso eignet sich die Polyurethan-Zusammensetzung als Dichtmasse zum Abdichten eines Elements, insbesondere zur Abdichtung im Fahrzeugbau oder bei der Fahrzeugreparatur. Das Element ist beispielsweise ein Substrat, eine Oberfläche, eine Fuge und/oder ein Hohlraum.

Die Erfindung betrifft auch ein Verfahren zur Härtung einer Polyurethan-Zusammensetzung wie sie vorstehend beschrieben ist, wobei die Polyurethan-Zusammensetzung durch Einwirkung von Hitze ausgehärtet wird.

Die Temperatur, die für Hitzehärtung eingesetzt wird, kann abhängig von der eingesetzten Polyurethan-Zusammensetzung, dem gewünschten Vernetzungsgrad und der Dauer der Hitzehärtung in weiten Bereichen variieren. Die Hitzehärtung kann z.B. bei Temperaturen im Bereich von 100 bis 220°C durchgeführt werden. Die Dauer der Hitzehärtung kann z.B. im Bereich von 1 bis 120 min liegen.

Die Erfindung betrifft auch ein Verfahren zum Verkleben von Fügeteilen, insbesondere Fahrzeugteile, mit der erfindungsgemäßen hitzehärtbaren Polyurethan-Zusammensetzung wie vorstehend beschrieben, umfassend:
a) das Auftragen der hitzehärtbaren Polyurethan-Zusammensetzung auf eine oder beide zu verklebende Fügeteiloberflächen,
b) Kontaktieren der zu verklebenden Fügeteiloberflächen und
c) Härten der Polyurethan-Zusammensetzung durch Hitzehärtung, insbesondere bei Temperaturen wie sie vorstehend beschrieben sind.

Weiter betrifft die Erfindung ein Verfahren zur Abdichtung eines abzudichtenden Elements mit der erfindungsgemäßen hitzehärtbaren Polyurethan-Zusammensetzung wie vorstehend beschrieben, umfassend:
a) das Auftragen der hitzehärtbaren Polyurethan-Zusammensetzung auf und/oder in das abzudichtende Element;
b) Härten der Polyurethan-Zusammensetzung durch Hitzehärtung, insbesondere bei Temperaturen wie sie vorstehend beschrieben sind.

Das abzudichtende Element ist insbesondere ein Substrat, eine Oberfläche, eine Fuge und/oder ein Hohlraum, insbesondere eines Fahrzeugs. In Schritt a) kann die hitzehärtbare Polyurethan-Zusammensetzung entsprechend auf das Substrat oder die Oberfläche aufgetragen werden und/oder in die Fuge und/oder in den Hohlraum eingebracht werden

Die Fügeteile bzw. die zu verklebenden Fügeteiloberflächen und/oder das abzudichtende Element können aus jedem beliebigen Material sein, wobei die zu verklebenden Fügeteiloberflächen aus dem gleichen Material oder aus verschiedenen Materialien sein können. Beispiele für geeignete Materialien sind Metall, Metalllegierungen, Glas, Kunststoff, Keramik, Textilien oder lackierte Elemente oder Fügeteile.

Das Auftragen der hitzehärtbaren Polyurethan-Zusammensetzung auf eine oder beide zu verklebende Fügeteiloberflächen oder das abzudichtende Element kann auf übliche, dem Fachmann bekannte Weise erfolgen. Zu verklebenden Fügeteiloberflächen werden kontaktiert, wobei die zu verklebenden Fügeteiloberflächen gegebenenfalls gegeneinander gepresst werden.

Die Härtung der Polyurethan-Zusammensetzung wird dann bei Hitze, z.B. bei Temperaturen im Bereich von 100 bis 220°C insbesondere im Temperaturbereich von zwischen 150°C und 220°C, durch Hitzehärtung durchgeführt.

Die Erfindung betrifft auch einen Gegenstand, umfassend Fügeteile und eine gehärtete Polyurethan-Zusammensetzung als Klebverbindung der Fügeteile, der nach dem erfindungsgemäßen Verfahren erhältlich ist. Bei den Fügeteilen handelt es sich im Besonderen um Bestandteile eines Fahrzeugs.

Ebenfalls betrifft die Erfindung ein Element, insbesondere eines Fahrzeugs, mit einer gehärtete Polyurethan-Zusammensetzung wie sie vorstehend beschrieben ist, als Dichtmasse.

Im Folgenden wird die Erfindung durch Beispiele weiter erläutert, die die Erfindung aber in keiner Weise beschränken sollen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Die verwendeten Chemikalien wurden, sofern nicht anders bezeichnet, von Sigma-Aldrich (Schweiz) bezogen.

### Herstellung von Prepolymeren:

### Polymer P1:

780.0 g Desmophen^{®} 5031 BT (Glycerin-gestartetes Ethylenoxid-terminiertes Polyoxypropylen-Triol, OH-Zahl 28.0 mg KOH/g, OH-Funktionalität ca. 2.3; von Covestro) und 220 g 1-Isocyanato-3,3,5-trimethyl-5-isocyanatomethylcyclohexan (Vestanat^{®} IPDI, von Evonik) wurden nach bekanntem Verfahren bei 80 °C zu einem Polyetherurethan-Polymer mit einem NCO-Gehalt von 6.4 Gewichts-%, einer Viskosität von 4.1 Pa·s bei 20 °C und einem Gehalt an monomerem IPDI von ca. 12 Gewichts-% umgesetzt.

Anschliessend wurden die flüchtigen Bestandteile, insbesondere der Grossteil des monomeren IPDI, in einem Kurzwegverdampfer destillativ entfernt (Manteltemperatur 160 °C, Druck 0.1 bis 0.005 mbar). Das so erhaltene Polyetherurethan-Polymer wies einen NCO-Gehalt von 1.9 Gewichts-%, eine Viskosität von 8.2 Pa·s bei 20 °C und einen Gehalt an monomerem IPDI von 0.02 Gewichts-% auf.

Polymer **P1** ist ein Prepolymer (Isocyanatgruppen-haltiges Polymer) mit niedrigem Gehalt an monomeren Diisocyanaten.

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Polyurethan-Zusammensetzungen

Die in Tabelle 1 angegebenen Inhaltsstoffe wurden in den angegebenen Mengen (in Gewichtsteilen) mittels eines Plantenmischers unter Vakuum und Feuchtigkeitsausschluss zu einkomponentigen Polyurethan-Zusammensetzungen **R** und **C1** - **C5** vermischt und bis zur Verwendung unter Feuchtigkeitsausschluss aufbewahrt.

**Tabelle 1: Polyurethan-Zusammensetzungen (Zahlen in Gew.-%)**

| **Zusammensetzung → ↓ Inhaltsstoffe** | **R** | **C1** | **C2** | **C3** | **C4** | **C5** |
|---|---|---|---|---|---|---|
| Polymer **P1** | 36 | 35 | 33 | 30 | 27 | 33 |
| Härter | | | | | | |
| - Hydrazid beschichtet mit Isocyanat-Monomer¹ | 1.27^{1a} | 1.28 | 1.73 | 2.18 | 2.57 | 1.73 |
| | 0.103^{1b} | 0.105 | 0.14 | 0.178 | 0.21 | 0.14 |
| - Epoxidharz² | 0 | 1 | 3 | 6 | 9 | 3 |
| Kreide³ | 38.5 | 38.5 | 38.5 | 38.5 | 38.5 | 38.5 |
| Weichmacher^{4,5} | 14.127⁴ | 14.115⁴ | 13.63⁴ | 13.142⁴ | 12.72⁴ | 13.63⁵ |
| Rheologiehilfsmittel⁶ | 8.0 | 8.0 | 8.0 | 8.0 | 8.0 | 8.0 |
| Pigment⁷ | 2.0 | 2.0 | 2.0 | 2.0 | 2.0 | 2.0 |
| | 100.0 | 100.0 | 100 | 100 | 100 | 100 |

| | | | | | | |
|---|---|---|---|---|---|---|
| ¹ Adipinsäuredihydrazid beschichtet mit Diphenylmethandiisocyanat (Desmodur CD-L von Covestro) durch vorgängiges Vermischen der beiden Komponenten bei 23°C und 10 min Rühren unter Vakuum ^{1a} Gehalt an total eingesetztem Adipinsäuredihydrazid (vor Beschichtung) ^{1b} Eingesetzte Menge an Isocyanat-Monomer für Beschichtung ² Araldite GY 250 (von Huntsman) ³ Omyacarb^{®} 5 GU (von Omya) ⁴ Trioctyltrimellitat ⁵ Diisodecylphthalat ⁶ Cab-O-Sil TS-720 (Hydrophobe Kieselsäure; Cabot Corp.) ⁷ Titandioxid (Kronos 2220 von Kronos) | | | | | | |

Die Zusammensetzungen liessen sich bei Temperaturen bis 60°C über mehrere Monate problemlos lagern.

### Hitzehärtung von Proben und Eigenschaften

Filme aus Zusammensetzungen **R** und **C1** - **C5** mit einer Schichtdicke von 2 mm wurden bei verschiedenen Aushärtetemperaturen während 30 Minuten gehärtet und während 7 Tagen im Normklima (23°C, 50% relative Luftfeuchtigkeit) gelagert. Weder während der Hitzehärtung noch danach trat ölige Flüssigkeit oder dergleichen aus den ausgehärteten Produkten aus.

Sodann wurden die Zugfestigkeit, die Bruchdehnung und das E-Modul wurden nach DIN 53504 (Zuggeschwindigkeit: 200 mm/min) bestimmt. Tabelle 2 gibt einen Überblick über die Resultate.

Filme mit den Zusammensetzungen **C1** - **C2,** welche als Härter Hydrazid und Epoxidharz enthalten, können bei Temperaturen zwischen 100 - 200°C ausgehärtet werden. Die Zugfestigkeit, Bruchdehnung und E-Modul bleiben dabei über den gesamten Temperaturbereich in praxisrelevanten Bereichen. Bei den Filmen mit den Zusammensetzungen **C2, C3, C4** und **C5** ist dies sogar bis 220°C der Fall.

Insbesondere das E-Modul ist relativ konstant, wobei der Film mit der Zusammensetzungen **C4** ein besonders stabiles E-Modul über den gesamten Temperaturbereich und zugleich relativ hohe Werte für die Zugfestigkeit und die Bruchdehnung aufweist.

Im Gegensatz dazu beträgt bei der Vergleichsprobe **R** das E-Modul bei 200°C nur noch 1.5 MPa, während bei 220°C keine Werte mehr messbar («n.m.») sind.

Die beschriebenen Ausführungsbeispiele sind jedoch lediglich als illustrative Beispiele zu verstehen, welche im Rahmen der Erfindung beliebig abgewandelt werden können.

**Tabelle 2: Eigenschaften der Polyurethan-Zusammensetzungen**

| **Zusammensetzung → Aushärtetemperatur/ ↓ Eigenschaften** | **R** | **C1** | **C2** | **C3** | **C4** | **C5** |
|---|---|---|---|---|---|---|
| T = 100° | | | | | | |
| - Zugfestigkeit [MPa] | 4.8 | 5.4 | 6.5 | 6.1 | 5.9 | - |
| - Bruchdehnung [%] | 758 | 672 | 739 | 761 | 777 | - |
| - E-Modul [MPa] | 2.4 | 3.3 | 3.0 | 2.5 | 2.0 | - |

| T = 120° | | | | | | |
|---|---|---|---|---|---|---|
| - Zugfestigkeit [MPa] | 5.8 | 7.2 | 6.6 | 5.6 | 5.0 | 6.3 |
| - Bruchdehnung [%] | 710 | 778 | 790 | 768 | 735 | 754 |
| - E-Modul [MPa] | 3.4 | 3.2 | 2.6 | 2.2 | 1.8 | 2.9 |

| T = 140° | | | | | | |
|---|---|---|---|---|---|---|
| - Zugfestigkeit [MPa] | 6.7 | 7.0 | 5.5 | 5.7 | 6.0 | 5.6 |
| - Bruchdehnung [%] | 791 | 802 | 682 | 439 | 242 | 694 |
| - E-Modul [MPa] | 3.2 | 3.1 | 2.9 | 4.2 | 5.6 | 3.2 |

| T = 160° | | | | | | |
|---|---|---|---|---|---|---|
| - Zugfestigkeit [MPa] | 6.8 | 7.1 | 5.8 | 5.7 | 6.6 | 5.4 |
| - Bruchdehnung [%] | 857 | 816 | 426 | 181 | 150 | 449 |
| - E-Modul [MPa] | 2.8 | 2.8 | 4.5 | 6.4 | 8.5 | 4.4 |

| T = 180° | | | | | | |
|---|---|---|---|---|---|---|
| - Zugfestigkeit [MPa] | 5.8 | 5.8 | 5.6 | 5.6 | 6.3 | 5.1 |
| - Bruchdehnung [%] | 978 | 718 | 266 | 116 | 102 | 260 |
| - E-Modul [MPa] | 2.1 | 2.6 | 4.8 | 7.0 | 9.4 | 5.1 |

| T = 200° | | | | | | |
|---|---|---|---|---|---|---|
| - Zugfestigkeit [MPa] | 5.1 | 5.5 | 6.1 | 6.1 | 5.9 | 6.0 |
| - Bruchdehnung [%] | 926 | 469 | 246 | 128 | 90 | 238 |
| - E-Modul [MPa] | 1.5 | 1.9 | 3.9 | 6.1 | 9.1 | 3.9 |

| T = 220° | | | | | | |
|---|---|---|---|---|---|---|
| - Zugfestigkeit [MPa] | n.m. | n.m. | 5.1 | 5.2 | 5.2 | 5.0 |
| - Bruchdehnung [%] | n.m. | n.m. | 306 | 134 | 85 | 324 |
| - E-Modul [MPa] | n.m. | n.m. | 2.3 | 4.5 | 8.1 | 2.5 |

## Patentansprüche

1. Verwendung eines Hydrazids mit einem Schmelzpunkt von mindestens 65°C als Härter für die Hitzehärtung in einer hitzehärtbaren Polyurethan-Zusammensetzung, die ein Prepolymer mit Isocyanat-Endgruppen, erhalten aus mindestens einem Polyisocyanat und mindestens einem Polyol, sowie mindestens ein Epoxidharz umfasst.

2. Verwendung nach Anspruch 1, wobei das Hydrazid ein Carbonsäurehydrazid, insbesondere ein Carbonsäuredihydrazid, bevorzugt ausgewählt aus der Gruppe bestehend aus Carbodihydrazid, Oxalsäuredihydrazid, Bernsteinsäuredihydrazid, Adipinsäuredihydrazid, Korksäuredihydrazid, Azelainsäuredihydrazid, Sebacinsäuredihydrazid, Dodecansäuredihydrazid und Isophtalsäuredihydrazid, meist bevorzugt Adipinsäuredihydrazid, ist.

3. Verwendung nach wenigstens einem der Ansprüche 1 oder 2, wobei das Hydrazid mit einem Isocyanat-Monomer, insbesondere mit einem Diisocyanat-Monomer, im Speziellem mit Diphenylmethandiisocyanat, beschichtet ist.

4. Verwendung nach Anspruch 3, wobei ein Gewichtsverhältnis von Isocyanat-Monomer zu Hydrazid im Bereich von 0.01 - 0.20, insbesondere 0.03 - 0.15, im Speziellen 0.05 - 0.12, liegt.

5. Verwendung nach wenigstens einem der Ansprüche 1 bis 4, wobei das Hydrazid mit einem Anteil von 1.5 - 10 Gewichtsteilen bevorzugt 2.0 - 7.5 Gewichtsteilen, im Besonderen 2.5 - 5.5 Gewichtsteilen verwendet wird, bezogen auf ein Gewichtsteil Isocyanatgruppen im Prepolymer enthalten in der hitzehärtbaren Polyurethan-Zusammensetzung.

6. Verwendung nach wenigstens einem der Ansprüche 1 bis 5, wobei das Epoxidharz ein Polyepoxid ist, insbesondere ein Diglycidylether von Bisphenol-A, Bisphenol-F und/oder Bisphenol-A/F.

7. Verwendung nach wenigstens einem der Ansprüche 1 bis 6, wobei das Epoxidharz mit einem Anteil von 0.1 - 15 Gew.-%, bevorzugt 1 - 10 Gew.-%, im Besonderen 2 - 5 Gew.-%, bezogen auf das Gesamtgewicht der hitzehärtbaren Polyurethan-Zusammensetzung verwendet wird.

8. Verwendung nach wenigstens einem der Ansprüche 1 bis 7, wobei zusätzlich ein Weichmacher eingesetzt wird, wobei bevorzugt der Weichmacher bei 20°C einen Dampfdruck von weniger als 0.1 mbar und/oder bei Normaldruck von 101.325 kPa einen Siedepunkt von wenigstens 250°C, bevorzugt wenigstens 300°C, im Speziellen wenigstens 350°C, aufweist.

9. Verwendung nach Anspruch 8, wobei der Weichmacher ausgewählt ist aus Phthalaten und/oder Trimellitaten, insbesondere Diisodecylphthalat (DIDP) und/oder Trioctyltrimellitat.

10. Verwendung nach wenigstens einem der Ansprüche 8 oder 9, wobei der Weichmacher mit einem Anteil von 0.1 - 30 Gew.-%, bevorzugt 5 - 25 Gew.-%, im Besonderen 10 - 20 Gew.-%, bezogen auf das Gesamtgewicht der hitzehärtbaren Polyurethan-Zusammensetzung verwendet wird.

11. Verwendung nach wenigstens einem der Ansprüche 1 bis 10, wobei das Prepolymer mit Isocyanat-Endgruppen aus mindestens einem Polyisocyanat und mindestens einem Polyol über einen Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.2 Gewichts-%, im Speziellen höchstens 0.1 Gewichts-%.

12. Verwendung nach wenigstens einem der Ansprüche 1 bis 11, wobei die hitzehärtbare Polyurethan-Zusammensetzung folgende Komponenten bezogen auf das Gesamtgewicht hitzehärtbaren Polyurethan-Zusammensetzung aufweist:
a) 0.5 - 15, Gew.-%, bevorzugt 1 - 10 Gew.-%, im Besonderen 1.5 - 3.0 Gew.-%, des Hydrazids;
b) 0.1 - 15 Gew.-%, bevorzugt 1 - 10 Gew.-%, im Besonderen 2 - 5 Gew.-%, des Epoxidharzes;
c) 15 - 70 Gew.-%, bevorzugt 20 - 50 Gew.-%, im Besonderen 25 - 40 Gew.-%, des Prepolymers;
d) 0 - 1, Gew.-%, bevorzugt 0.02 - 1 Gew.-%, im Besonderen 0.1 - 0.3 Gew.-%, des Isocyanat-Monomers;
e) 0 - 70 Gew.%, bevorzugt 10 - 60 Gew.-%, im Besonderen 40 - 50 Gew.-%, anorganische und/oder organische Füllstoffe;
f) 0 - 30 Gew.-%, bevorzugt 5 - 25 Gew.-%, im Besonderen 10 - 20 Gew.-%, Weichmacher;
g) 0 - 5 Gew.-%; bevorzugt 0.5 - 4 Gew.-%, im Besonderen 1 - 3 Gew.-%, Stabilisatoren;
h) 0 - 1 Gew.-%, bevorzugt 0.01 - 0.8 Gew.-%, im Besonderen 0.05 - 0.6 Gew.-%, Katalysatoren;
i) Optional ein oder mehrere zusätzliche Additive.

13. Verwendung nach irgendeinem der Ansprüche 1 bis 12, wobei die Polyurethan-Zusammensetzung eine einkomponentige Zusammensetzung ist, insbesondere ein einkomponentiger Klebstoff und/oder Dichtstoff, besonders bevorzugt für den Fahrzeugbau.

14. Hitzehärtbare Polyurethan-Zusammensetzung, insbesondere wie sie in einem der vorangehenden Ansprüche beschrieben ist und/oder durch die Verwendung nach einem der vorangehenden Ansprüche erhältlich ist, umfassend: (i) ein Prepolymer mit Isocyanat-Endgruppen aus mindestens einem Polyisocyanat und mindestens einem Polyol, (ii) ein Hydrazid und (iii) ein Epoxidharz.

15. Verfahren zur Härtung einer Polyurethan-Zusammensetzung nach Anspruch 14, wobei die Polyurethan-Zusammensetzung durch Einwirkung von Hitze, insbesondere im Temperaturbereich von zwischen 150°C und 220°C ausgehärtet wird.
